# EUROPÄISCHE PATENTSCHRIFT

(11) **EP 1 881 463 B1**
(45) Veröffentlichungstag und Bekanntmachung des Hinweises auf die Patenterteilung: **12.12.2012**
(21) Anmeldenummer: 07111298.1
(22) Anmeldetag: 03.04.2000
(51) Int. Cl.: G07F 7/08

(54) **Verfahren und System zum Auf- oder Nachladen von in Mobilfunkgeräten eingeführten Chipkarten mit einem Geldbetragswert**
Method and system for charging or re-charging smartcards in wireless devices with a monetary amount
Procédé et système destinés à charger ou recharger des cartes à puce introduites dans des appareils radio mobiles d'un certain montant

(43) Veröffentlichungstag der Anmeldung: 23.01.2008
(62) Teilanmeldung aus: 00912320.9
(73) Patentinhaber: Swisscom AG, 3050 Bern (CH)
(72) Erfinder: Martschitsch, Andreas, 3006 Bern (CH); Ritter, Rudolf, 3052 Zollikofen (CH)
(74) Vertreter: BOVARD AG

(56) Entgegenhaltungen:
- EP-A- 0 986 275
- WO-A-96/38801

## Beschreibung

Die vorliegende Erfindung betrifft ein Verfahren und ein System zum Auf- oder Nachladen von in Mobilfunkgeräten eingeführten Chipkarten mit einem Guthaben für einen Geldbetragswert an einem Bezugsterminal, wobei der Geldbetragswert mit einem Gutschriftsverfahren und/oder Wertcodeverfahren über eine Zentraleinheit dem Benutzer gutgeschrieben wird. Insbesondere betrifft die vorliegende Erfindung ein Verfahren und System zum Auf- oder Nachladen von SIM-Karten von Mobilfunkgeräten.

Das Auf- oder Nachladen von im voraus bezahlten Guthaben auf Chipkarten (wie z.B. Smart-Cards oder SIM-Cards) ist allgemein bekannt. In der veröffentlichten Patentanmeldung EP 827 119 A1 wird ein Verfahren zum Aufladen oder Nachladen einer Chipkarte mit einem Geldbetragswert beschrieben. Gemäss dem in EP 827 119 A1 beschriebenen Verfahren wird der Verkaufswert einer an sehr vielen öffentlichen Verkaufsstellen verfügbaren Wertkarte auf eine bestimmte Chipkarte, insbesondere eine SIM-Karte (Subscriber Identification Modul), auf- oder nachgeladen, nachdem ein sich auf dieser Wertkarte befindender Wertcode an eine Dienstzentrale übertragen wurde. Ein alternatives Verfahren zum Aufladen von Telefonkarten für Mobilfunktelefone mit einer Wertkarte wird in der Patentanmeldung EP 848 537 A1 beschrieben. Gemäss dem in EP 848 537 A1 beschriebenen Verfahren wird der Verkauf einer Telefonkarte, insbesondere einer SIM-Karte, in einer Kundendatenbank registriert und die vorausbezahlte Telefonkarte wird erst aktiviert, nachdem der Benutzer beim ersten abgehenden Anruf eine von ihm definierte Geheimnummer eingibt. Der Kreditbetrag wird nicht auf der Karte, sondern in einem Benutzerkonto gespeichert. Zum Wiederaufladen des Kartenkredits ruft der Benutzer eine Dienstnummer an und gibt zusätzlich zur Geheimnummer eine Kreditkartennummer oder einen Wertcode einer Wertkarte ein, worauf das Benutzerkonto mit einem nachzuladenden Betrag erhöht wird. Wertkarten mit darauf gespeicherten Wertcodes, wie sie in der veröffentlichten Patentanmeldung EP 827 119 A1 beschrieben werden, können in unzähligen Anwendungsgebieten eingesetzt werden, da die auf einer Wertkarte gespeicherten Wertcodes nicht nur zum Aufladen von Telefonkarten oder anderen Chipkarten mit einem Geldbetragswert verwendet werden können, sondern da diese Wertcodes eingelöst werden können, um Kredit für unterschiedlichste kostenpflichtige Dienstleistungen zu erhalten. Allerdings hat die Verteilung von Wertcodes mittels einer Wertkarte als Träger den Nachteil, dass die Herstellung dieser Wertkarten mit Kosten verbunden ist, die nicht auf den Kunden übertragen werden können, da die Wertkarten sonst ihre Attraktivität bei den Kunden verlieren würden. Zusätzlich zu den Herstellungskosten ist auch der Vertrieb dieser Wertkarten fortwährend mit Kosten verbunden, da die Betreiber von öffentlich zugänglichen Verkaufsstellen diese Wertkarten nicht ohne Gewinnmarge verkaufen wollen. Typischerweise gehen diese Herstellungs- und Vertriebskosten zu Lasten des Dienstanbieters, beispielsweise der Betreiber eines Telekommunikationsnetzes. Die Kunden erwarten, dass sie die dem Geldbetragswert der Wertkarte entsprechende Dienstleistung erhalten. Es sollte erwähnt werden, dass die wegwerfbaren Wertkarten zudem unnötig die Umwelt belasten. Schliesslich sind auch Sicherheitsüberlegungen wichtig. Wertcodekarten wie auch Chipkarten mit einem vorausbezahlten Guthaben werden normalerweise in grösseren Mengen hergestellt, transportiert und durch irgendeine Endverkaufsstelle an die Kunden verkauft. Dabei kann der Schutz der Karten und Wertcodes vor betrügerischem Kopieren oder Diebstahl sehr aufwendig sein. Diesen Mangel versucht man damit zu umgehen, dass z.B. die Wertcodes oder Authorisationscodes zusätzlich geschützt werden, indem man sie mit speziellen Verpackungen, Abreiboberflächen etc. abdeckt. Trotzdem bliebt das Risiko eines Betrugs oder Diebstahls gerade an Endverkaufsstellen mit grösseren Lagerbeständen bestehen. Als weiterer Stand der Technik kann EP 0986275 A1 angeführt werden. EP 0986275 A1 zeigt ein Verfahren, bei welchem ein von einem Benutzer vorgängig bezahlter Geldbetragswert von einer Validationsplattform mittels einer Kurzmeldung auf die SIM-Karte des Mobilfunkgerätes des Benutzers übertragen wird. Der auf der SIM-Karte gespeicherte Geldbetragswert kann vom Benutzer dazu verwendet werden, kostenpflichtige Produkte oder Dienstleistungen eines Anbieters über das Mobilfunknetz mittels Kurzmeldungen zu bestellen. Um die Sicherheit zu erhöhen ist im Stand der Technik der Gebrauch von Verteilermaschinen anstelle von Endverkaufsstellen bekannt, wie z.B. die Patentanmeldung WO 96/38801 zeigt. Trotzdem bleibt die Sicherheit einer der Nachteile des Standes der Technik. Benutzt werden im Stand der Technik üblicherweise Automated Teller Machines (ATM) wie Bankomaten oder Point of Sales (POS) Terminals, welche die Buchung über ein Bankkonto des Benutzers, Kreditkarten oder Prepaidkarten (z.B. Smart-Cards) durchführt. Dabei muss ein Benutzer stets Wertcodes oder irgendein Identifikationscode verwenden, um damit auf ein in einer Zentraleinheit gespeichertes Guthaben zugreifen zu können. Das komplizierte Verfahren über Wertcodes ist ebenfalls ein Nachteil des Standes der Technik.

Es ist eine Aufgabe dieser Erfindung, ein neues Verfahren zum Aufladen und Nachladen von Chipkarten mit einem Geldbetragswert vorzuschlagen, welches die oben beschriebenen Nachteile nicht aufweist. Insbesondere soll das Auf- oder Nachladen ohne kompliziertes Wertcodeverfahren möglich sein und ohne die Nachteile des Standes der Technik bezüglich Sicherheit.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zum Auf- oder Nachladen von in Mobilfunkgeräten eingeführten Chipkarten mit einem Guthaben für einen Geldbetragswert eine Zentraleinheit das Guthaben über ein Mobilfunknetz auf die einer Rufnummer eines Benutzers des Mobilfunknetzes zugeordneten Chipkarte überträgt, wobei ein Benutzer den Geldbetragswert an einem vom Mobilfunkgerät unabhängigen Bezugsterminal bezahlt. Die Bezahlung erfolgt, indem der Benutzer einen Geldbetrag in das Bezugsterminal einwirft und/oder dem Benutzer ein Geldbetrag über eine Kreditkarte belastet wird und/oder dem Benutzer ein Geldbetrag auf einer Prepaidkarte mit abgespeichertem, vorausbezahltem Geldbetrag belastet wird und/oder dem Benutzer ein Geldbetrag auf einem zentral abgespeicherten Konto belastet wird, wobei das Bezugsterminal Bestellinformationen an die Zentraleinheit übermittelt, welche Bestellinformationen mindestens den Geldbetragswert und die Rufnummer umfassen. Der Rufnummer wird in der Zentraleinheit ein Guthaben in der Höhe des Geldbetragswerts zugeordnet und in einer Datenbank der Zentraleinheit abgespeichert. Bei den Chipkarten kann es sich z.B. um SIM-Karten (Subscriber Identification Module) oder Smart-Cards handeln. Einer der Vorteile ist, dass ein Benutzer eine Chipkarte eines Mobiltelefons direkt auf- oder nachladen kann, ohne ein kompliziertes Verfahren mit Wertcodes benutzen zu müssen. So muss mit dieser Ausführungsvariante weder das Verteilen der Wertcodekarten über einen Zwischenhandel, noch die Produktion von physikalischen Wertkarten bezahlt werden, was beides Kosten verursacht. Diese Kosten können im Normalfall nicht auf den Endabnehmer übertragen werden, sondern bleiben bei den Telekommgesellschaften hängen. Ein anderer Vorteil ist, dass der Benutzer in dieser Ausführungsvariante im Gegensatz zu Wertcodeverfahren keinen weiteren Schritt zum Auf- oder Nachladen der Chipkarte auszuführen braucht, wie z.B. die Eingabe eines Wertcodes über die Eingabeelemente des Mobilfunkgerätes und das Übermitteln eines Wertcodes an eine Zentraleinheit. Mögliche Fehlerquellen, z.B. bei der Eingabe, werden damit vermieden. Durch das Benutzen öffentlich zugänglicher Bezugsterminals ist das Auf- und Nachladen von Chipkarten während vierundzwanzig Stunden pro Tag möglich. Nachtarbeit durch eine Belegschaft an einer Verteilstelle ist damit unnötig. Zu erwähnen ist auch die höhere Sicherheit dieser Ausführungsvariante vor Missbrauch wie z.B. der Gefahr des Diebstahls von Wertcodekarten oder Prepaidkarten am Bezugsterminal.

Insbesondere werden die Ziele durch die Erfindung dadurch erreicht, dass zum Auf- oder Nachladen von in Mobilfunkgeräten eingeführten Chipkarten mit einem Guthaben für einen Geldbetragswert eine Zentraleinheit das Guthaben über ein Mobilfunknetz auf die einer Rufnummer eines Benutzers des Mobilfunknetzes zugeordneten Chipkarte überträgt, wobei ein Benutzer den Geldbetragswert an einem vom Mobilfunkgerät unabhängigen Bezugsterminal bezahlt. Die Bezahlung erfolgt, indem der Benutzer einen Geldbetrag in das Bezugsterminal einwirft und/oder dem Benutzer ein Geldbetrag über eine Kreditkarte belastet wird und/oder dem Benutzer ein Geldbetrag auf einer Prepaidkarte mit abgespeichertem, vorausbezahltem Geldbetrag belastet wird und/oder dem Benutzer ein Geldbetrag auf einem zentral abgespeicherten Konto belastet wird, wobei mindestens ein Wertcode durch Übermitteln von Bestellinformationen vom Bezugsterminal an einen Wertcodeausgeber angefordert wird. Die Bestellinformationen umfassen mindestens den Geldbetragswert. Der Wertcode wird von der Zentraleinheit generiert und in einer Datenbank des Wertcodeausgebers abgespeichert. Die Ausgabe des Wertcodes für das Guthaben an den Benutzer erfolgt über das Bezugsterminal, wobei dieser ausgegebene Wertcode in der Datenbank des Wertcodeausgebers mit dem Geldbetragswert verknüpft ist und wobei der Wertcode und die Rufnummer zum Auf- oder Nachladen der Chipkarte an die Zentraleinheit übermittelt werden. Bei den Chipkarten kann es sich z.B. um SIM-Karten (Subscriber Identification Module) oder Smart-Cards handeln. Ein Vorteil dieser Ausführungsvariante ist eine hohe Sicherheit vor Missbrauch, wie z.B. der Gefahr des Diebstahls von Wertcodekarten oder Prepaidkarten am Bezugsterminal. Ein weiterer Vorteil gegenüber der vorhergehenden Ausführungsvariante ist, dass Wertcodes anonym beim Bezugsterminal bezogen werden können und sich so dazu eignen z.B. an andere Benutzer des Mobilfunknetzes weitergegeben zu werden. Ein Vorteil ist ebenso, dass Benutzer Wertcodes direkt, ohne Zwischenhandel über das Bezugsterminal bezahlen und beziehen können, wobei keine physikalischen Wertkarten (z.B. mit Abreibflächen) produziert werden müssen, da eine Anzeige oder ein einfacher Ausdruck des Wertcodes auf Papier ausreichen. Insbesondere ist die Verteilung der Wertcodes ohne Nachtarbeit während vierundzwanzig Stunden pro Tag möglich.

In einer Ausführungsvariante sind die Bezugsterminals in Fahrscheinautomaten eines öffentlichen Verkehrsbetriebes integriert. Diese Ausführungsvariante hat den Vorteil, dass mit nur geringfügigen Anpassungen auf eine bestehende Infrastruktur zurückgegriffen werden kann. Ein anderer Vorteil ist, dass diese Fahrscheinautomaten meist bereits in genügender Anzahl und an für die Öffentlichkeit gut zugänglichen Plätzen vorhanden sind.

In einer weiteren Ausführungsvariante sind die Bezugsterminal in öffentlich zugängliche Terminals einer Telekommunikationsgesellschaft integriert. Auch hier bestehen die Vorteile wie in der vorgehenden Ausführungsvariante in der bereits bestehenden Infrastruktur, welche nur leicht modifiziert werden muss, in ihrer bereits grossen Verbreitung und ihrer einfachen Zugänglichkeit durch die Benutzer. Zur Integration des Bezugsterminals kann aber auch eine Automated Teller Machines (ATM) wie Bankomaten oder Point of Sales (POS) Terminals benutzt werden, welche die Buchung über ein Bankkonto des Benutzers, Kreditkarten oder Prepaidkarten (z.B. Smart-Cards) durchführt.

In einer weiteren Ausführungsvariante wird die Ausgabe der Wertcodes und/oder der Gutschriftsbestätigungen auf einer Druckereinheit des Bezugsterminals ausgedruckt. Die Nachteile des Standes der Technik bezüglich Sicherheit etc. beim Lagern von Wertkarten und Wertcodekarten fallen durch das Drucken von Wertcodes oder von einem Geldbetragswert zugeordneten Identifikationsnummern vor Ort beim Bezugsterminal weg.

An dieser Stelle soll festgehalten werden, dass sich die vorliegende Erfindung neben den erfindungsgemässen Verfahren auch auf ein System zur Ausführung dieser Verfahren bezieht.

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm, welches schematisch ein System für eine Ausführungsvariante mit Gutschriftverfahren zum Auf- oder Nachladen einer in einem Mobilfunkgerät eingeführten Chipkarte illustriert.
Figur 2 zeigt ein Blockdiagramm, welches schematisch ein System für eine Ausführungsvariante mit Wertcodeverfahren zum Auf- und Nachladen einer in einem Mobilfunkgerät eingeführten Chipkarte illustriert.
Figur 3 zeigt ein Flussdiagramm, welches schematisch die Schritte des Benutzermenüs eines Bezugsterminals zum Auf- oder Nachladen einer in einem Mobilfunkgerät eingeführten Chipkarte illustriert.

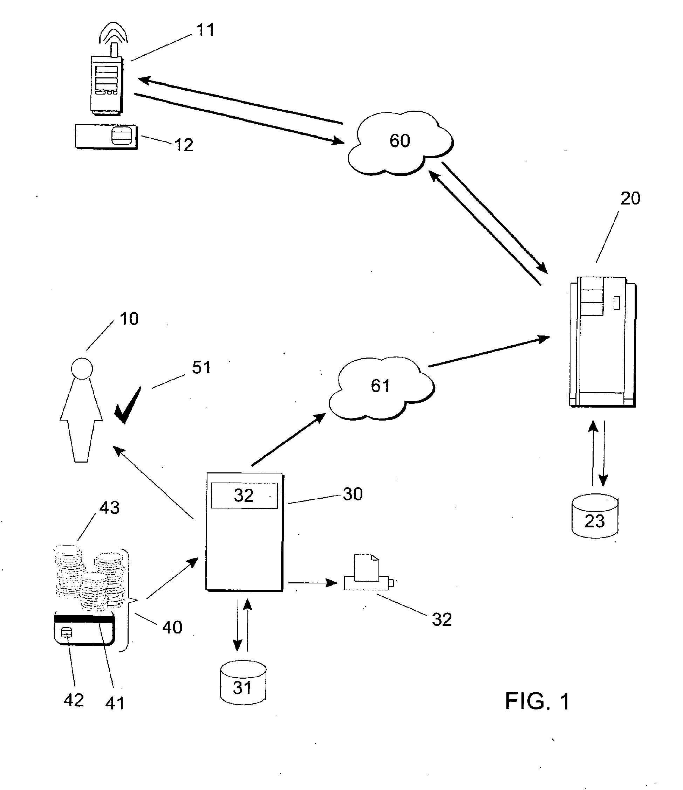

Figur 1 illustriert eine Architektur, die zur Realisierung der Erfindung verwendet werden kann. In diesem Ausführungsbeispiel bezahlt ein Benutzer 10 zum Nach- oder Aufladen einer in einem Mobilfunkgerät 11 eingeführten Chipkarte 12 Geldbetragswerte an einem Bezugsterminal 30. Bei den Chipkarten 12 kann es sich z.B. um SIM-Karten (Subscriber Identification Module) oder Smart-Cards handeln, wobei den Chipkarten jeweils eine Rufnummer zugeordnet ist. Die Zuordnung kann z.B. über ein HLR (Home Location Register) erfolgen, indem im HRL die IMSI (International Mobile Subscriber Identification) einer Rufnummer z.B. einer MSISDN (Mobile Subscriber ISDN) zugeordnet abgespeichert ist. Die Bezahlung erfolgt mittels eines Zahlungsmoduls 32 des Bezugsterminals 30, indem der Benutzer 10 einen Geldbetrag 43 in das Bezugsterminal 30 einwirft und/oder dem Benutzer 10 ein Geldbetrag über eine Kreditkarte 41 belastet wird und/oder dem Benutzer 10 ein Geldbetrag auf einer Chipkarte 42 mit abgespeichertem, vorausbezahltem Geldbetrag (sog. PrepaidKarten) belastet wird und/oder dem Benutzer 10 ein Geldbetrag auf einem zentral abgespeicherten Konto (z.B. eine Bank- oder Postkonto) belastet wird. Das Belasten auf einer Kreditkarte 41 kann z.B. dadurch geschehen, dass der Benutzer die Kreditkarte 41 in das Terminal einführt und zur Identifikation einen PIN-Code (Personal Identification Number) eingibt oder dass er den Namen, die Kreditkartennummer und eventuell zusätzlich das Verfallsdatum der Kreditkarte eingibt, wie es z.B. beim Warenbezug übers Internet üblich ist. Durch das Einzahlen des Geldbetragswerts erhält der Benutzer 10 im Bezugsterminal 30 ein Guthaben zugeordnet. Die Zuordnung kann z.B. mit einer Timeout-Funktion im Bezugsterminal 30 unterbrochen werden. Der eingezahlte Geldbetragswert wird dem momentanen Benutzer 10 des Bezugsterminals 30 solange zugeordnet, bis der Geldbetragswert in einer Zentraleinheit 20 gutgeschrieben wurde oder bei Inaktivität des Benutzers der Vorgang nach einer vordefinierten Zeiteinheit der Timeout-Funktion unterbrochen wurde. Das Bezugsterminal 30 ist über einen Kommunikationskanal 61 mit der Zentraleinheit 20 verbunden. Das Bezugsterminal 30 kann beispielsweise in einen Fahrscheinautomaten eines öffentlichen Verkehrsbetriebes, in öffentlich zugängliche Terminals einer Telekommunikationsgesellschaft, in eine Automated Teller Machines (ATM) wie Bankomaten oder Point of Sales (POS) Terminals integriert sein. Das Bezugsterminal kann aber auch z.B. eine nur für diesen Zweck vorgesehene öffentlich zugängliche Einheit sein. Der Kommunikationskanal 61 zwischen der Zentraleinheit 20 und dem Bezugsterminal 30 kann z.B. ein Telekommunikationsnetz, beispielsweise ein Festnetz, wie ein LAN (Local Area Network) oder WAN (Wide Area Network), das öffentliche geschaltete Telefonnetz (PSTN, Public Switched Telephone Network und/oder ISDN, Integrated Services Digital Network), das Internet oder ein anderes Kommunikationsnetz, insbesondere ein Mobilfunknetz umfassen. Durch Übermitteln von Bestellinformationen vom Bezugsterminal 30 an die Zentraleinheit 20 wird einem Identifikationscode (ID) eines Benutzers des Mobilfunknetzes 60 ein Guthaben zugeordnet und in einer Datenbank 23 der Zentraleinheit 20 abgespeichert. Der Datentransfer wird z.B. über ein software- oder hardwaremässig implementiertes Transfermodul des Bezugsterminals 30 eingeleitet und durchgeführt. Die Bestellinformationen umfassen mindestens einen Geldbetragswert und einen Identifikationscode. Der Identifikationscode des Benutzers kann beispielsweise eine MSISDN (Mobile Subscriber ISDN), IMSI (International Mobile Subscriber Identifikation) oder andere IDs (Identification Number) sein. Falls die Rufnummer der Chipkarte nicht gleichzeitig als Identifikationscode verwendet wurde, so existiert eine eindeutige Verknüpfung der Rufnummer mit dem Identifikationscode in der Zentraleinheit 20. Die Übergabe des Identifikationscodes an das Bezugsterminal 30 kann z.B. über Eingabeelemente des Bezugsterminals, über eine drahtlose Schnittstelle eines Mobilfunkgerätes 11 (beispielsweise einer Infrarotschnittstelle (IR)) oder einer anderen Benutzerschnittstelle erfolgen. Bei der Eingabe über ein Mobilfunkgerät 11 z.B. über IR ist auch vorstellbar, dass das Bezugsterminal 30 automatisch die MSISDN der Chipkarte 12 des für die Eingabe benutzten Mobilfunkgerätes 11 als ID übernimmt. Der Benutzer 10, welchem das Guthaben über den Identifikationscode in der Zentraleinheit 20 zugeordnet wird, muss nicht unbedingt identisch mit dem Benutzer 10 des Bezugsterminals 30 sein, sondern kann irgendein Benutzer sein. Z.B können es Eltern sein, die das Guthaben auf der SIM-Karte eines Mobilfunkgeräts, welches einem ihrer Kinder gehört, erhöhen möchten, ohne dass dem Kind z.B Geld zum Kaufen einer Prepaid-Karte gegeben werden muss. Das zugeordnete Guthaben wird von der Zentraleinheit 20 zum Auf- oder Nachladen einer Chipkarte 12 verwendet, indem die Zentraleinheit 20 den Geldbetragswert über das Mobilfunknetz 60 auf die der Rufnummer zugeordnete Chipkarte 12 eines Mobilfunkgeräts 11 überträgt. Die Rufnummer kann gleichzeitig als Identifikationscode des Benutzers 10 verwendet werden und/oder zusätzlich mit den Bestellinformationen übermittelt werden. Die Rufnummer kann aber auch vorgängig in der Zentraleinheit dem Identifikationscode zugeordnet abgespeichert sein. Das Mobilfunknetz 60 kann z.B. ein GSM-, ein UMTS- oder ein anderes Mobilfunknetz 60 sein. Die Kommunikation über das Mobilfunknetz 60 erfolgt beispielsweise mittels speziellen Kurzmeldungen, beispielsweise SMS- (Short Message Services), USSD- (Unstructured Supplementary Services Data) Meldungen oder andere Techniken wie MExE (Mobile Execution Environment), über Protokolle wie GPRS (Generalized Packet Radio Service), WAP (Wireless Applicaton Protokoll) oder UMTS (Universal Mobile Telecommunication System) oder über einen Nutzkanal.

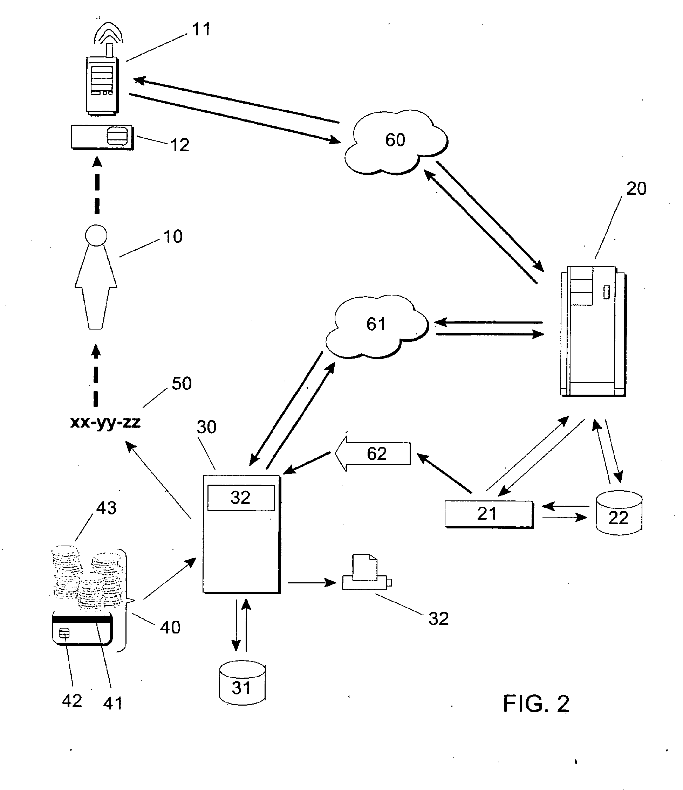

In der Figur 2 bezieht sich das Bezugszeichen 21 auf einen Wertcodeausgeber, der über die notwendige Infrastruktur, einschliesslich Hardwareund Softwarekomponenten sowie gegebenenfalls personelle Ressourcen, verfügt, um im nachfolgend beschriebenen Verfahren die Funktion eines Wertcodeausgebers auszuführen, das heisst, um Bestellungen von Wertcodes entgegenzunehmen, um bestellte Wertcodes an den Besteller auszuliefern, und um gegebenenfalls in der betreffenden Variante des Verfahrens notwendige Bestätigungen entgegenzunehmen. Je nach Ausführungsvariante des erfindungsgemässen Verfahrens werden die Wertcodes zu einem geeigneten Zeitpunkt des Verfahrens generiert und in einer Datenbank 22 des Wertcodeausgebers 21 abgespeichert. Die Wertcodes können von einem Benutzer oder von einem anderen Inhaber, an welchen der Benutzer den Wertcode übertragen hat, eingelöst werden, um Kredit für kostenpflichtige Dienstleistungen zu erhalten, beispielsweise für Telefongespräche, für den Bezug von Gütern, wie beispielsweise Benzin von einer automatisierten Zapfsäule, für die Benützung von öffentlichen Verkehrsmitteln oder zum Bezug von elektronischem Bargeld für die Bezahlung von unterschiedlichsten Gütern und Dienstleitungen.

Figur 2 illustriert eine Architektur, die zur Realisierung der Erfindung verwendet werden kann. Die Bezahlung durch den Benutzer 10 erfolgt auf gleiche Weise wie in vorhergehenden Ausführungsbeispiel. Durch das Einbezahlen des Geldbetragswerts erhält der Benutzer 10 im Bezugsterminal 30 ein Guthaben zugeordnet. Eine Zentraleinheit 30 ist über einen Kommunikationskanal 61/62 mit dem Bezugsterminal 30 verbunden. Das Bezugsterminal 30 kann beispielsweise in einen Fahrscheinautomaten eines öffentlichen Verkehrsbetriebes, in öffentlich zugängliche Terminals einer Telekommunikationsgesellschaft, in eine Automated Teller Machines (ATM) wie Bankomaten oder Point of Sales (POS) Terminals integriert sein. Das Bezugsterminal kann aber auch z.B. eine nur für diesen Zweck vorgesehene öffentlich zugängliche Einheit sein. Der Kommunikationskanal 61 zwischen der Zentraleinheit 20 und dem Bezugsterminal 30 kann z.B. ein Telekommunikationsnetz, beispielsweise ein Festnetz, wie ein LAN (Local Area Network) oder WAN (Wide Area Network), das öffentliche geschaltete Telefonnetz (PSTN, Public Switched Telephone Network und/oder ISDN, Integrated Services Digital Network), das Internet oder ein anderes Kommunikationsnetz, insbesondere ein Mobilfunknetz umfassen. Der Kommunikationskanal 62 kann aber auch über eine andere, nicht netzbasierende Datenübertragung von der Zentraleinheit 20 zum Bezugsterminal 30 erfolgen, wie z.B. ein Batch-Verfahren, mit welchem die Daten des Bezugsterminals 30 über einen Datenträger z.B. in regelmässigen Zeitabständen aktualisiert werden. Der Benutzer 10 wählt die Höhe des zu bestellenden Wertcodes 50 am Bezugsterminal 30. Durch Übermitteln von Bestellinformationen vom Bezugsterminal 30 an einen Wertcodeausgeber 21 wird mindestens ein Wertcode 50 angefordert. Im Falle eines netzbasierenden Kommunikationskanals 61 kann der Datentransfer z.B. über ein software- oder hardwaremässig implementiertes Transfermodul des Bezugsterminals 30 eingeleitet und durchgeführt werden. Die Bestellinformationen umfassen dabei mindestens den Geldbetragswert. Der Wertcodeausgeber 21 umfasst eine Datenbank 22, in welcher von der Zentraleinheit 20 generierte Wertcodes 50 abgespeichert sind. Jeder Wertcode 50 ist mit einem festen Guthaben verknüpft und in der Zentraleinheit 20 abgespeichert. Im Falle, dass ein Batch-Verfahren für den Datentransfer von der Zentraleinheit 20 zum Bezugsterminal 30 benutzt wird, umfasst das Bezugsterminal 30 den Wertcodeausgeber 21. Bei einer netzbasierenden Ausführungsvariante kann z.B. die Zentraleinheit 20 den Wertcodeausgeber 21 umfassen. Der Wertcodeausgeber kann aber auch als eigenständige Einheit ins Netz eingebunden sein. Das Bezugsterminal 30 gibt Wertcodes 50 in der Höhe des Guthabens über ein Ausgabemodul an den Benutzer 10 aus. Die Wertcodes 50 werden von einem Benutzer 10 des Mobilfunknetzes 60 zum Auf- oder Nachladen einer Chipkarte 12 benutzt, indem der Wertcode 50 zusammen mit der Rufnummer des Mobilfunkgerätes 11 z.B. über ein Mobilfunkgerät 11, ein Bezugsterminal 30 oder eine andere Schnittstelle an die Zentraleinheit 20 übermittelt wird. Die Übergabe der Rufnummer an einem Bezugsterminal 30 kann z.B. über Eingabeelemente des Bezugsterminals 30 oder über eine drahtlose Schnittstelle eines Mobilfunkgerätes 11, beispielsweise einer Infrarotschnittstelle (IR) erfolgen. Der Benutzer 10, welcher den Wertcode 50 bezogen hat, muss nicht unbedingt identisch mit dem Benutzer des Mobilfunkgerätes 11 mit der nachzuladenden Chipkarte 12 sein, sondern kann irgendein Benutzer 10 sein, wie das Beispiel mit den Eltern im vorhergehenden Ausführungsbeispiel. Die Übermittlung der Rufnummer durch den Benutzer 10 kann wegfallen, falls die Rufnummer des Mobilfunkgerätes 11 mit der nachzuladenden Chipkarte 12 identisch ist mit der Rufnummer des Mobilfunkgerätes 11, über welches der Wertcode an die Zentraleinheit 20 übermittelt wurde. Um dies zu erreichen, kann z.B. die Rufnummer mit Hilfe von Anschlusserkennung ermittelt werden. Die Zentraleinheit 20 führt das Auf- oder Nachladen durch, indem sie den Geldbetragswert über ein Mobilfunknetz 60 auf die einer Rufnummer zugeordnete Chipkarte 12 eines Mobilfunkgeräts 11 überträgt. Die Zuordnung kann z.B. über ein HLR (Home Location Register) erfolgen, indem die IMSI (International Mobile Subscriber Identification) einer Rufnummer z.B. einer MSISDN (Mobile Subscriber ISDN) zugeordnet abgespeichert ist. Das Mobilfunknetz 60 kann z.B. ein GSM-, ein UMTS- oder ein anderes Mobilfunknetz sein. Die Kommunikation über das Mobilfunknetz 60 erfolgt z.B. mittels speziellen Kurzmeldungen, beispielsweise SMS- (Short Message Services), USSD- (Unstructured Supplementary Services Data) Meldungen oder andere Techniken wie MExE (Mobile Execution Environment), über Protokolle wie GPRS (Generalized Packet Radio Service), WAP (Wireless Applicaton Protokoll) oder UMTS (Universal Mobile Telecommunication System) oder über einen Nutzkanal.

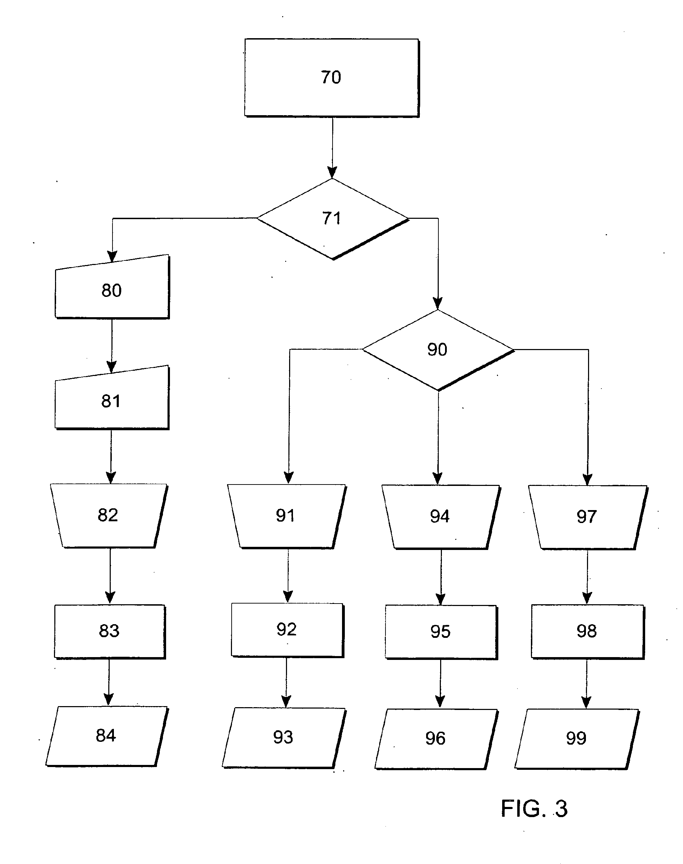

Figur 3 illustriert ein Ausführungsbeispiel einer Eingabeabfolge durch den Benutzer 10 an einem Bezugsterminal 30. In diesem Ausführungsbeispiel wählt der Benutzer 10 in einem ersten Schritt 70 am Bezugsterminal 30 über ein Eingabemenü die Funktion zum Auf- oder Nachladen einer Chipkarte 12 eines Mobilfunkgerätes 11 aus. Im zweiten Schritt 71 kann der Benutzer 10 zwischen dem Auf- oder Nachladen über ein direktes Gutschriftverfahren oder über ein Wertcodeverfahren wählen. Beim direkten Gutschriftverfahren wird der Benutzer 10 aufgefordert, als nächstes eine Rufnummer eines Mobilfunkgerätes 11 (Schritt 80) und den Geldbetrag (Schritt 81) für das Auf- oder Nachladen der Chipkarte einzugeben. Die Bezahlung erfolgt mit Schritt 82, indem der Benutzer 10 den Geldbetrag 43 in das Bezugsterminal 30 einwirft und/oder dem Benutzer ein Geldbetrag über eine Kreditkarte 41 belastet wird und/oder dem Benutzer ein Geldbetrag auf einer Chipkarte 42 mit abgespeichertem, vorausbezahltem Geldbetrag sog. Prepaidkarte belastet wird und/oder dem Benutzer ein Geldbetrag auf einem zentral abgespeicherten Konto (z.B. eine Bank- oder Postkonto) belastet wird. Durch das Einbezahlen des Geldbetragswertes erhält der Benutzer 10 im Bezugsterminal 30 ein Guthaben zugeordnet. Durch Übermitteln (Schritt 83) von Bestellinformationen vom Bezugsterminal 30 an die Zentraleinheit 20 wird der Zahlungsvorgang abgeschlossen, wobei die Bestellinformationen mindestens die Rufnummer und/oder einen anderen Identifikationscode sowie den Geltbetragswert umfasst. Im letzten Schritt 84 erhält der Benutzer 10 vom Bezugsterminal 30 über ein Ausgabemodul eine Bestätigung 51 angezeigt und/oder von einer Druckereinheit 32 ausgedruckt, dass ein Guthaben in der Höhe des Geldbetragwertes von der Zentraleinheit 20 registriert wurde und das Auf- oder Nachladen der Chipkarte 12 ausgeführt wird. Wählt der Benutzer 10 bei Schritt 71 das Wertcodeverfahren, so wird er mit Schritt 90 aufgefordert, einen bestimmten Geldbetragswert eines Wertcodes zu wählen. Die Bezahlung erfolgt mit Schritt 91/94/97 wie in Schritt 82. Durch das Einbezahlen des Geldbetragwertes erhält der Benutzer 10 im Bezugsterminal 30 ein Guthaben zugeordnet. Durch Übermitteln von Bestellinformationen (Schritt 92/95/98) vom Bezugsterminal 30 an einen Wertcodeausgeber 21 wird mindestens ein Wertcode 50 in der Gesamthöhe des Geldbetragswertes angefordert. Im letzten Schritt 93/96/99 erhält der Benutzer 10 vom Bezugsterminal 30 den Wertcode 50 anzeigt und/oder von einer Druckereinheit 32 ausgedruckt.

## Patentansprüche

1. Verfahren zum Auf- oder Nachladen von in Mobilfunkgeräten (11) eingeführten Chipkarten (12) mit einem Guthaben für einen Geldbetragswert unter Benutzung eines Bezugsterminals (30), in welchem Verfahren eine Zentraleinheit (20) das Guthaben auf die einer Rufnummer eines Benutzers des Mobilfunknetzes (80) zugeordnete Chipkarte (12) überträgt, **dadurch gekennzeichnet,**
**dass** ein Benutzer den Geldbetragswert an einem von den Mobilfunkgeräten (11) unabhängigen Bezugsterminal (30) einbezahlt,
**dass** eine Identifikation des Benutzers an das Bezugsterminal (30) übergeben wird,
**dass** Bestellinformationen, die mindestens den Geldbetragswert und die Identifikation des Benutzers umfassen, vom Bezugsterminal (30) über einen Kommunikationskanal (61) an die Zentraleinheit (20) übermittelt werden, und
**dass** aufgrund der Bestellinformationen die Zentraleinheit (20) das Guthaben auf die der Rufnummer des Benutzers des Mobilfunknetzes (80) zugeordnete Chipkarte (12) überträgt.

2. Verfahren nach Anspruch 1, **dadurch gekennzeichnet, dass** die Identifikation des Benutzers über Eingabeelemente des Bezugsterminals (30) an das Bezugsterminal (30) übergeben wird.

3. Verfahren nach Anspruch 1, **dadurch gekennzeichnet, dass** die Identifikation des Benutzers über eine drahtlose Schnittstelle zwischen einem Mobilfunkgerät (11) und dem Bezugsterminal (30) an das Bezugsterminal (30) übergeben wird.

4. Verfahren nach einem der Ansprüche 1 bis 3, **dadurch gekennzeichnet, dass** als Identifikation des Benutzers eine MSISDN (Mobile Subscriber Integrated Services Digital Network) oder eine IMSI (International Mobile Subscriber Identity) verwendet wird.

5. Verfahren nach einem der Ansprüche 1 bis 4, **dadurch gekennzeichnet, dass** statt der Übertragung des Geldbetragswerts auf die der Rufnummer des Benutzers des Mobilfunknetzes (80) zugeordnete Chipkarte die Zentraleinheit (20) von einem Wertcodeausgeber (21) einen Wertcode (50) anfordert, wobei dieser Wertcode (50) mit dem Geldbetragswert verknüpft und in der Zentraleinheit (20) abgespeichert wird, und wobei das Bezugsterminal (30) den Wertcode (50) an den Benutzer ausgibt.

6. System zum Auf- oder Nachladen von in Mobilfunkgeräten (11) eingeführten Chipkarten (12) mit einem Guthaben für einen Geldbetragswert unter Benutzung eines Bezugsterminals (30), in welchem System mittels einer Zentraleinheit (20) das Guthaben auf die einer Rufnummer eines Benutzers des Mobilfunknetzes (80) zugeordnete Chipkarte (12) übertragbar ist, **dadurch gekennzeichnet,**
**dass** der Geldbetragswert durch einen Benutzer an einem von den Mobilfunkgeräten (11) unabhängigen Bezugsterminal (30) einbezahlbar ist,
**dass** eine Identifikation des Benutzers an das Bezugsterminal (30) übergebbar ist,
**dass** Bestellinformationen, die mindestens den Geldbetragswert und die Identifikation des Benutzers umfassen, vom Bezugsterminal (30) über einen Kommunikationskanal (61) an die Zentraleinheit (20) übermittelbar sind, und
**dass** aufgrund der Bestellinformationen mittels der Zentraleinheit (20) das Guthaben auf die der Rufnummer des Benutzers des Mobilfunknetzes (80) zugeordnete Chipkarte (12) übertragbar ist.

7. System nach Anspruch 6, **dadurch gekennzeichnet, dass** die Identifikation des Benutzers über Eingabeelemente des Bezugsterminals (30) an das Bezugsterminal (30) übergebbar ist.

8. System nach Anspruch 6, **dadurch gekennzeichnet, dass** die Identifikation des Benutzers über eine drahtlose Schnittstelle zwischen einem Mobilfunkgerät (11) und dem Bezugsterminal (30) an das Bezugsterminal (30) übergebbar ist.

9. System nach einem der Ansprüche 6 bis 8, **dadurch gekennzeichnet, dass** als Identifikation des Benutzers eine MSISDN (Mobile Subscriber Integrated Services Digital Network) oder eine IMSI (International Mobile Subscriber Identity) verwendbar ist.

10. System nach einem der Ansprüche 6 bis 9, **dadurch gekennzeichnet, dass** statt der Übertragung des Geldbetragswerts auf die der Rufnummer des Benutzers des Mobilfunknetzes (80) zugeordnete Chipkarte mittels der Zentraleinheit (20) von einem Wertcodeausgeber (21) ein Wertcode (50) anforderbar ist, wobei dieser Wertcode (50) mit dem Geldbetragswert verknüpft und in der Zentraleinheit (20) abspeicherbar ist, und wobei der Wertcode (50) durch das Bezugsterminal (30) an den Benutzer ausgebbar ist.

## Claims

1. Method for loading or reloading chipcards (12) inserted in mobile radio devices (11) with a credit for a monetary amount value using a collection terminal (30), in which method a central unit (20) transmits the credit to the chipcard (12) assigned to a call number of a user of the mobile radio network (80), **characterised in that**
a user (10) pays in the monetary amount value at a collection terminal (30) independent from the mobile radio devices (11),
an identification of the user is passed to the collection terminal (30),
order information containing at least the monetary amount value and the identification of the user is transmitted from the collection terminal (30) over a communication channel (61) to the central unit (20), and
based on the order information, the central unit (20) transmits the credit to the chipcard (12) assigned to the call number of the user of the mobile radio network (80).

2. Method according to claim 1, **characterised in that** the identification of the user is passed to the collection terminal (30) via input elements of the collection terminal (30).

3. Method according to claim 1, **characterised in that** the identification of the user is passed to the collection terminal (30) via a wireless interface between a mobile radio device (11) and the collection terminal (30).

4. Method according to one of the claims 1 to 3, **characterised in that** an MSISDN (Mobile Subscriber Integrated Services Digital Network) or an IMSI (International Mobile Subscriber Identity) is used as the identification of the user.

5. Method according to one of the claims 1 to 4, **characterised in that**, instead of the transmission of the monetary amount value to the chipcard assigned to the call number of the user of the mobile radio network (80), the central unit (20) requests a value code (50) from a value code issuer (21), this value code (50) being linked to the monetary amount value and being stored in the central unit (20), and the collection terminal (30) giving out the value code (50) to the user.

6. System for loading or reloading chip cards (12) inserted in mobile radio devices (11) with a credit for a monetary amount value using a collection terminal (30), in which system, by means of a central unit (20), the credit is transmittable to the chipcard (12) assigned to a call number of a user of the mobile radio network (80), **characterised in that**
the monetary amount value is able to be paid in by a user at a collection terminal (30) independent of the mobile radio devices (11),
an identification of the user is able to be passed to the collection terminal (30),
order information containing at least the monetary amount value and the identification of the user is transmittable from the collection terminal (30) to the central unit (20) over a communication channel (61), and
based on the order information, by means of the central unit (20), the credit is transmittable to the chipcard (12) assigned to the call number of the user of the mobile radio network (80).

7. System according to claim 6, **characterised in that** the identification of the user is able to be passed to the collection terminal (30) via input elements of the collection terminal (30).

8. System according to claim 6, **characterised in that** the identification of the user is able to be passed to the collection terminal (30) via a wireless interface between a mobile radio device (11) and the collection terminal (30).

9. System according to one of the claims 6 to 8, **characterised in that** an MSISDN (Mobile Subscriber Integrated Services Digital Network) or an IMSI (International Mobile Subscriber Identity) is usable as identification of the user.

10. System according to one of the claims 6 to 9, **characterised in that**, instead of transmission of the monetary amount value to the chipcard assigned to the call number of the user of the mobile radio network (80), a value code (50) is able to be requested from a value code issuer (21) by means of the central unit (20), this value code (50) being linked to the monetary amount value and being storable in the central unit (20), and the value code (50) being able to be given out to the user by the collection terminal (30).

## Revendications

1. Procédé pour le chargement ou le rechargement de cartes à puce (12) introduites dans des appareils de téléphonie mobile (11) avec un crédit d'une valeur monétaire utilisant un terminal de référence (30), dans lequel procédé une unité centrale (20) transmet le crédit sur la carte à puce (12) assignée à un numéro d'appel d'un utilisateur du réseau de téléphonie mobile (80), **caractérisé en ce**
**qu'**un utilisateur (10) paie la valeur monétaire à un terminal de référence (30) indépendant des appareils de téléphonie mobile (11),
**qu'**une identification de l'utilisateur est transmise au terminal de référence (30),
**que** des informations de commande qui comprennent au moins la valeur monétaire et l'identification de l'utilisateur sont transmises du terminal de référence (30) par un canal de communication (61) à l'unité centrale (20), et
**qu'**en raison des informations de commande, l'unité centrale (20) transmet le crédit sur la carte à puce (12) assignée au numéro d'appel de l'utilisateur du réseau de téléphonie mobile (80).

2. Procédé selon la revendication 1, **caractérisé en ce que** l'identification de l'utilisateur est transmise au terminal de référence (30) via des éléments de saisie du terminal de référence (30).

3. Procédé selon la revendication 1, **caractérisé en ce que** l'identification de l'utilisateur est transmise au terminal de référence (30) via une interface sans fil entre un appareil de téléphonie mobile (11) et le terminal de référence (30).

4. Procédé selon l'une quelconque des revendications 1 à 3, **caractérisé en ce qu'**un MSISDN (Mobile Subscriber Integrated Services Digital Network) ou un IMSI (International Mobile Subscriber Identity) est utilisé comme identification de l'utilisateur.

5. Procédé selon l'une quelconque des revendications 1 à 4, **caractérisé en ce que**, à la place de la transmission de la valeur monétaire à la carte à puce assignée au numéro d'appel de l'utilisateur du réseau de téléphonie mobile (80), l'unité centrale (20) requiert un code de valeur (50) depuis un distributeur de codes de valeur (21), ce code de valeur (50) étant associé à la valeur monétaire et sauvegardé dans l'unité centrale (20), et le terminal de référence (30) émettant le code de valeur (50) à l'utilisateur.

6. Système pour le chargement et le rechargement de cartes à puce (12) introduites dans des appareils de téléphonie mobile (11) avec un crédit pour une valeur monétaire utilisant un terminal de référence (30), dans lequel système, au moyen d'une unité centrale (20), le crédit est transmissible à la carte à puce (12) assignée à un numéro d'appel d'un utilisateur du réseau de téléphonie mobile (80), **caractérisé en ce**
**que** la valeur monétaire est payable par un utilisateur à un terminal de référence (30) indépendant des appareils de téléphonie mobile (11),
**qu'**une identification de l'utilisateur est transmissible au terminal de référence (30),
**que** des informations de commande, comprenant au moins la valeur monétaire et l'identification de l'utilisateur, sont transmissibles du terminal de référence (30) à l'unité centrale (20) par un canal de communication (61), et
**qu'**en raison des informations de commande, le crédit est transmissible au moyen d'une unité centrale (20) à la carte à puce (12) assignée au numéro d'appel de l'utilisateur du réseau de téléphonie mobile (80).

7. Système selon la revendication 6, **caractérisé en ce que** l'identification de l'utilisateur est transmissible au terminal de référence (30) via des éléments de saisie du terminal de référence (30).

8. Système selon la revendication 6, **caractérisé en ce que** l'identification de l'utilisateur est transmissible au terminal de référence (30) via une interface sans fil entre un appareil de téléphonie mobile (11) et le terminal de référence (30).

9. Système selon l'une des revendications 6 à 8, **caractérisé en ce qu'**un MSISDN (Mobile Subscriber Integrated Services Digital Network) ou un IMSI (International Mobile Subscriber Identity) est utilisable comme identification de l'utilisateur.

10. Système selon l'une des revendications 6 à 9, **caractérisé en ce que**, au lieu de la transmission de la valeur monétaire sur la carte à puce assignée au numéro d'appel de l'utilisateur du réseau de téléphonie mobile (80), un code de valeur (50) est requis à un distributeur de codes de valeur (21) au moyen d'une unité centrale (20), ce code de valeur (50) étant associé à la valeur monétaire et sauvegardé dans l'unité centrale (20), et le code de valeur (50) étant émis à l'utilisateur par le terminal de référence (30).
